# EUROPEAN PATENT SPECIFICATION

(11) **EP 3 456 606 B1**
(45) Date of publication and mention of the grant of the patent: **15.07.2020**
(21) Application number: 17380019.4
(22) Date of filing: 15.09.2017
(51) Int. Cl.: B61L 25/02

(54) **POSITION DETERMINATION METHOD AND SYSTEM**
POSITIONSBESTIMMUNGSVERFAHREN UND -SYSTEM
PROCÉDÉ ET SYSTÈME DE DÉTERMINATION DE POSITION

(43) Date of publication of application: 20.03.2019
(73) Proprietor: Aktiebolaget SKF, 41 550 Göteborg (SE)
(72) Inventor: Pinto, Elena, 28924 Alcorcón - Madrid (ES)
(74) Representative: Kuhstrebe, Jochen

(56) References cited:
- EP-A1- 1 623 905
- EP-A2- 0 231 661
- WO-A1-2016/139580
- AT-A1- 516 553
- US-A1- 2012 136 621
- US-A1- 2013 261 856

## Description

### FIELD OF THE INVENTION

The invention relates generally to the field of position determination and is more particular directed to a method and system for determining the geographic location of a rail vehicle.

### BACKGROUND OF THE INVENTION

Rail vehicles with on-board computers for position determination are well known in the art. Position determination may form part of an automatic train protection system, for example, to prevent collisions with other vehicles. Position determination is also used on vehicles with track monitoring equipment, so that identified defects in the track can be linked to a distance from a known reference point.

An example of a position determination system for a rail vehicle is disclosed in US6377215. The rail vehicle is equipped with a GPS receiver to provide "rough" positional information. For improved accuracy, to identify which track the vehicle is running on in the event that sections of different rail tracks are located close together, the system comprises means for detecting curved track sections and for detecting if the vehicle enters a track switch. Specifically, the vehicle has a pivotably coupled wheel truck and distance sensors mounted to the vehicle body at left and right sides thereof that measure the horizontal distance to the left and right front wheels respectively. When the vehicle is on a straight track section, the measured distances are substantially equal. When the wheel truck enters a curve or switch, the measured distances change. This information may then be used to accumulate data on the number, magnitude and sequence of curves and switches, to determine the rail vehicle's location relative to curves and switches defined in a rail track database. Another example of a position determination system is disclosed in WO2016/139580, describing an accelerometer, gyroscope and magnetometer applied in a railway vehicle for determination of stopping locations.

In metro rail networks, where the rail vehicles mainly travel underground, it is not possible to use GPS.

The present invention seeks to address this problem and define a method and system for position determination that does not rely on GPS.

### SUMMARY OF THE INVENTION

In a first aspect, the invention relates to a method of determining the geographical position of a rail vehicle travelling on a defined route that has a number of known stopping locations separated by known distances. The method comprises steps of:
- recording a linear speed signal of the vehicle;
- processing the speed signal to.
   ∘ identify a plurality of preceding stationary periods when linear speed equals zero, including a last stationary period and;
   ∘ calculate the distance travelled between the plurality of preceding stationary periods;
- comparing the calculated distances with the known distances between stopping locations, to match the last identified stationary period to a corresponding one of the known stopping locations and identify the direction of travel of the rail vehicle; and
- determining the geographical position of the rail vehicle by processing a portion of the speed signal recorded since the last identified stationary period, to calculate the distance travelled from the corresponding stopping location.

Suitably, the defined route is stored in a database, in which the position of each stopping location relative to a route start point is recorded, along with the distance travelled between successive stopping locations along the route. Typically, the stopping locations i.e. stations on an underground rail network are separated by distances of 500m - 2000m. Depending on the size of the network, the database may contain several defined routes on which a rail vehicle operating on the network might travel.

In the method of the invention, a speed signal of the rail vehicle is measured and processed. The speed signal may be obtained from a wheel angular speed sensor (tachometer), whereby the diameter of the wheel is used to convert the angular speed to a linear speed of the vehicle. An optical velocity meter comprising a pickup head mounted to the vehicle and a pair of light sources spaced in the direction of travel could also be employed. Furthermore, in applications where the routes on which a rail vehicle travels allow the use of GPS, the linear speed could be obtained from the GPS signal.

When the rail vehicle is stationary, speed is of course equal to zero, and it is most likely that an identified stationary period corresponds to the time spent at a station. During the step of processing, a number N of preceding stationary periods are identified from the speed signal. Between the stationary periods, the vehicle has made N-1 trips. The distance travelled during these N-1 trips is calculated by integrating the speed signal with respect to time.

In a next step, the N-1 calculated distances are compared with the known distances between stations stored in the database of defined route(s). Suitably, a pattern recognition algorithm is employed to identify a match between the sequence of calculated trip distances and a sequence of known distances within a defined route. As will be understood, the selected number N needs to be high enough to accurately identify a unique sequence within the defined routes. Depending on the network, five calculated trip distances may be sufficient, although this number can of course be higher.

When a match is found within a particular one of the one or more defined routes, the last identified stationary period within the speed signal is correlated to a corresponding stopping location within the particular route. The match will also identify the direction of travel, so that the next stopping location on the route is known.

In a final step, the current position of the vehicle is determined by integrating a portion of the speed signal obtained since the last stationary period, to calculate the distance travelled from the known position of the last stopping location.

In a second aspect, the invention relates to a position determination system for a rail vehicle comprising:
- a database of defined routes within a rail network, whereby each defined route has a number of scheduled stopping locations at known positions relative to a reference point; and
- a processor arranged to perform the method steps of the invention.

In an embodiment, the position determination system forms part of a track condition monitoring system, comprising one or more sensors for detecting defects in a top surface of the rails. Commonly, at least the vertical acceleration signal from an accelerometer mounted to e.g. an axle box at either side of one of the bogies is processed in order to identify the presence of a surface defect. Suitably, the position determination system is configured to perform the method of the invention at the time when the presence of a surface defect is identified from the processed signal

The invention will now be described in more detail, with reference to the accompanying figures.

### BRIEF DESCRIPTION OF THE FIGURES

- Fig. 1: is a schematic representation of a metro line constituting a route travelled by a rail vehicle.
- Fig. 2: is a plot of a linear speed signal that could be measured for a rail vehicle travelling on the route depicted in Fig. 1.

### DETAILED DESCRIPTION OF THE EMBODIMENTS

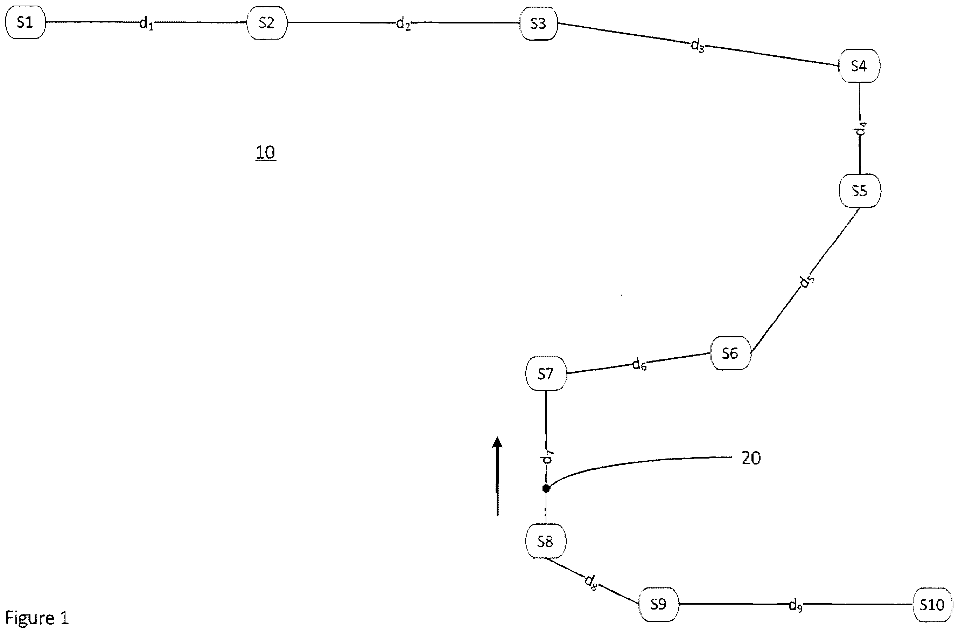

Fig. 1 is a schematic representation of a route 10 of an underground railway line having ten stations S1, S2,.... S10. A rail vehicle 20 travels back and forth along the route between the stations S1 and S10. The vehicle is equipped with a position determination system, to enable its location on the route to be determined at any given time or continuously monitored. The system implements an inventive method of position determination, based on using the signal from an on-board speed sensor to calculate the distance travelled during a number of previous trips and matching the calculated distances to a stored map of the route.

A vehicle stopping point at station S1 is defined as the start of the route and is located at mile marker 0. The mile marker location of a vehicle stopping point at each subsequent station along the route is known, meaning that the corresponding distances d₁, d₂, ...d₉ between neighbouring stations is also known. Assuming certain numerical values for the mile marker locations, the route of Figure 1 can be represented in tabular form as follows:

**Table 1: Example of a route comprising 10 stations and 18 stopping points**

| Stop No. | Station | Mile Marker (in metres) | Distance from previous station (m) |
|---|---|---|---|
| 1 | S1 | 0 | 1050 (d₁) |
| 2 | S2 | 1050 | 1050 (d₁) |
| 3 | S3 | 2175 | 1125 (d₂) |
| 4 | S4 | 3450 | 1275 (d₃) |
| 5 | S5 | 4150 | 700 (d₄) |
| 6 | S6 | 5200 | 1050 (d₅) |
| 7 | S7 | 6100 | 900 (d₆) |
| 8 | S8 | 6900 | 800 (d₇) |
| 9 | S9 | 7650 | 750 (d₈) |
| 10 | S10 | 8800 | 1150 (d₉) |
| 11 | S9 | 7650 | 1150 (d₉) |
| 12 | S8 | 6900 | 750 (d₈) |
| 13 14 | S7 | 6100 | 800 (d₇) |
| | S6 | 5200 | 900 (d₆) |
| 15 | S5 | 4150 | 1050 (d₅) |
| 16 | S4 | 3450 | 700 (d₄) |
| 17 | S3 | 2175 | 1275 (d₃) |
| 18 | S2 | 1050 | 1125 (d₂) |
| 1 | S1 | 0 | 1050 (d₁) |

The position determination system may be linked to a track condition monitoring system for detecting defects in a surface of the rails. In the depicted example, the rail vehicle 20 is provided with track monitoring equipment such as disclosed in US 668239. The equipment includes vertical acceleration sensors mounted at each side of a bogie of the rail vehicle, above a wheelset, and displacement transducers - one on each side of the bogie - arranged to monitor the distance between the bogie and the wheel. The sensor data is processed to calculate the magnitude of undulations in a top surface of the track.

Let us assume that an unacceptable value is calculated at a point in time when the vehicle 20 is travelling from station S8 to S7 as shown in Figure 1. To enable a maintenance crew to be sent to the location of the track defect, the position determination system is configured to determine the position of the vehicle at the time when a track defect has been detected. In an embodiment, the position determination system implements the following method:
A linear speed signal of the vehicle is measured and recorded. This may be done using a tachometer, such as a magnetic pulse encoder attached to a wheel shaft or to a wheel bearing that supports the wheel shaft. A known value of the wheel diameter is then used to convert the angular speed in rotations per unit time to distance per unit time. Other methods of measuring linear speed may also be employed.

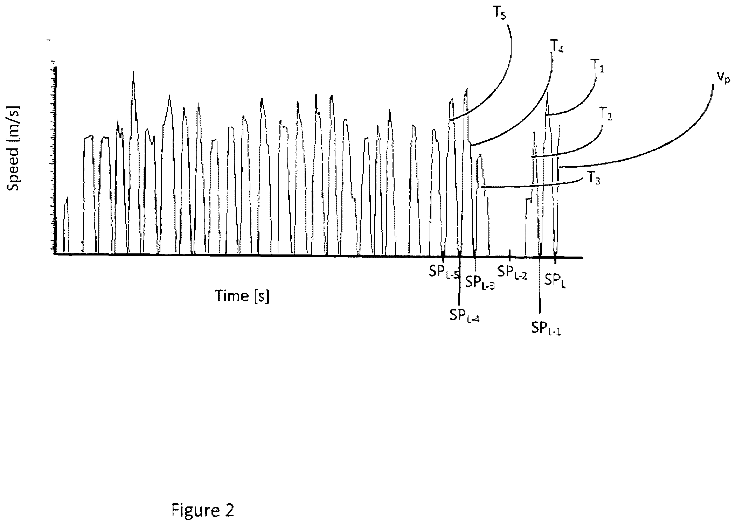

An example of a speed signal that could be measured is shown in Figure 2. The method comprises a step of processing the speed signal, firstly to identify a last stationary period SP_{L} when the vehicle speed was equal to zero and a number of preceding stationary periods SP_{L-1}, SP_{L-2}, SP_{L-3}, SP_{L-4}, SP_{L-5}. The speed signal between consecutive stationary periods corresponds to a number of previous trips T₁, T₂, T₃, T₄, T₅.

The step of processing further comprises integrating the speed signal with respect to time, to obtain the distance travelled during each of the previous trips T₁ - T₅.

Let us assume that the following distances are calculated: 749m, 1152m, 1151m, 753m, 801 m.

In a next step, the calculated distances (+/- a certain allowable error of e.g. 6m) are compared against the known distances between stations on the stored route, to identify which station corresponds to the last stationary period SP_{L} and determine the direction of travel of the rail vehicle. Any suitable pattern recognition algorithm may be employed.

In the given example, a match is found between the calculated trip history and the distances highlighted in Table 1. The distance travelled to reach the last stopping location was approximately equal to 750m. This trip distance on its own is not sufficient to determine which was the last station, given that this distance is travelled to reach stations S8 and S9, depending on the rail vehicle's direction of travel. Furthermore, in other examples of rail routes, the individual distances between stations may not be unique. At least the distance travelled in the preceding trip (approx.1150m) is needed in the present example in order to identify that station S8 was the last station and that the vehicle is travelling back to the start of the route. As will be understood, the number of trips included in the trip history is at least sufficient to enable a unique sequence to be identified within the route in question.

Preferably, a greater number of trips than the minimum number is included in the trip history, to improve accuracy and account for erroneous measurement results. For example, it the vehicle makes an unscheduled stop between stations within the calculated trip history, it is likely that the calculated distance travelled to reach that stopping location will not correspond to one of the values d₁, d₂, ...d₉ in the stored route. Or, if by coincidence it does correspond to a stored value, then the preceding or subsequent calculated distance will not.

The pattern recognition algorithm used in the step of comparing may be adapted to ignore a non-matching calculation result or sequence of results, and seek a match based on a smaller number of calculated distances. Additionally, the pattern recognition algorithm may be adapted to add non-matching calculation results and compare the sum with the stored distances, to find a match which identifies the last station and the direction travel.

In a final step, the location of the rail vehicle 20 is determined by calculating the distance travelled since the last station (S8 in the present example) using a portion of the speed signal vₚ measured since the last identified stationary period SP_{L}. Let us assume that integration of this signal portion vₚ results in a distance of 350m

We know that the last station S8 is located at mile marker 6900m and that the vehicle is travelling back towards the start of the route. The train positioning system thus determines that at the time of implementing the inventive method, i.e. at the time when a surface defect was detected, the rail vehicle's location is 6550m from the zero mile marker. A maintenance crew can thus be sent to the right location in order to carry out necessary track repairs.

## Claims

1. A method of determining the geographical position of a rail vehicle (20) on a rail route (10) having a number of known stopping locations (S1, S2, S3, ...) which are separated by known distances (d₁, d₂, d₃ ...), the method comprising steps of:
- recording a linear speed signal of the vehicle;
- processing the linear speed signal to:
• identify a plurality of preceding stationary periods (SP_{L}, SP_{L-1}, SP_{L-2} ...) when vehicle speed equals zero, including a last stationary period (SPL); and
• calculate the distance travelled between the plurality of preceding stationary periods;
- comparing the calculated distances with the known distances (d₁, d₂, d₃ ...) between stopping locations, to find a matching sequence that correlates the last identified stationary period (SP_{L}) to a corresponding one of the known stopping locations (S1, S2, S3, ...) and identifies the direction of travel of the rail vehicle (20); and
- determining the geographical position of the rail vehicle by processing a portion (vₚ) of the speed signal recorded since the last identified stationary period (SP_{L}) to calculate the distance travelled from the corresponding stopping location (S1, S2, S3, ...).

2. The method of claim 1, wherein a pattern recognition algorithm is used in the step of comparing.

3. The method of claim 1 or 2, wherein the linear speed signal is obtained by measuring a rotational speed of a vehicle wheel and using a known diameter of the wheel to obtain the linear speed of the rail vehicle.

4. A position determination system for a rail vehicle, the system comprising:
• a database of defined routes within a rail network, each defined route having a number of scheduled stopping locations (S1, S2, S3, ...) of known geographic position relative to a reference point; and
• a processor configured to receive a linear speed signal of the vehicle and to perform the steps according to the method of any of claims 1 - 3.

5. A track condition monitoring system comprising the position determination system of claim 4, the track condition monitoring system comprising one or more sensors mounted to a rail vehicle for detecting rail surface defects and a processor configured to analyse a signal from the one or more sensors and identify the presence of a surface defect, wherein the position determination system is configured to determine the position of the rail vehicle at the time when the presence of a surface defect is identified.

## Patentansprüche

1. Verfahren zum Bestimmen der geographischen Position eines Schienenfahrzeugs (20) auf einer Schienenstrecke (10) mit einer Anzahl von bekannten Haltepunkten (S1, S2, S3, ...), die um bekannte Entfernungen (d₁, d₂, d₃, ...) getrennt sind, wobei das Verfahren die folgenden Schritte umfasst:
- Aufzeichnen eines Lineargeschwindigkeitssignals des Fahrzeugs;
- Verarbeiten des Lineargeschwindigkeitssignals, um:
• mehrere vorangegangene Stillstandsphasen (SP_{L}, SP_{L-1,} SP_{L-2}, ...), in denen die Fahrzeuggeschwindigkeit gleich Null ist, einschließlich einer letzten Stillstandsphase (SP_{L}), zu identifizierten; und
• die zwischen den mehreren vorangegangenen Stillstandsphasen zurückgelegte Entfernung zu berechnen;
- Vergleichen der berechneten Entfernungen mit den bekannten Abständen (d₁, d₂, d₃, ...) zwischen Haltepunkten, um eine übereinstimmende Sequenz zu finden, die die letzte identifizierte Stillstandsphase (SP_{L}) mit einem entsprechenden der bekannten Haltepunkte (S1, S2, S3, ...) korreliert und die Fahrtrichtung des Schienenfahrzeugs (20) identifiziert; und
- Bestimmen der geographischen Position des Schienenfahrzeugs durch Verarbeiten eines Teils (vₚ) des seit der letzten identifizierten Stillstandsphase (SP_{L}) aufgezeichneten Geschwindigkeitssignals, um die von dem entsprechenden Haltepunkt (S1, S2, S3, ...) zurückgelegte Entfernung zu berechnen.

2. Verfahren nach Anspruch 1, wobei im Vergleichsschritt ein Mustererkennungsalgorithmus verwendet wird.

3. Verfahren nach Anspruch 1 oder 2, wobei das Lineargeschwindigkeitssignal durch Messen einer Drehgeschwindigkeit eines Fahrzeugrads und unter Verwendung eines bekannten Durchmessers des Rads erhalten wird, um die Lineargeschwindigkeit des Schienenfahrzeugs zu erhalten.

4. Positionsbestimmungssystem für ein Schienenfahrzeug, wobei das System Folgendes umfasst:
• eine Datenbank von definierten Strecken innerhalb eines Bahnnetzes, wobei jede definierte Strecke eine Anzahl von planmäßigen Haltepunkten (S1, S2, S3, ...) mit bekannter geographischer Position relativ zu einem Referenzpunkt aufweist; und
• einen Prozessor, der konfiguriert ist, um ein Lineargeschwindigkeitssignal des Fahrzeugs zu empfangen und die Schritte gemäß dem Verfahren nach einem der Ansprüche 1 - 3 auszuführen.

5. Gleiszustandsüberwachungssystem, umfassend das Positionsbestimmungssystem nach Anspruch 4, wobei das Gleiszustandsüberwachungssystem einen oder mehrere an einem Schienenfahrzeug montierte Sensoren zum Erfassen von Schienenoberflächendefekten und einen Prozessor umfasst, der konfiguriert ist, um ein Signal von dem einen bzw. den mehreren Sensoren zu analysieren und das Vorhandensein eines Oberflächendefekts zu identifizieren, wobei das Positionsbestimmungssystem konfiguriert ist, um die Position des Schienenfahrzeugs zu dem Zeitpunkt, zu dem das Vorhandensein eines Oberflächendefekts identifiziert wird, zu bestimmen.

## Revendications

1. Procédé de détermination de la position géographique d'un véhicule ferroviaire (20) sur un tracé ferroviaire (10) ayant un certain nombre de localisations d'arrêt connues (S1, S2, S3...) qui sont séparées par des distances connues (d₁, d₂, d₃...), le procédé comprenant les étapes consistant à :
- enregistrer un signal de vitesse linéaire du véhicule ;
- traiter le signal de vitesse linéaire pour :
• identifier une pluralité de périodes stationnaires précédentes (SP_{L}, SP_{L-1}, SP_{L-2}...) quand la vitesse de véhicule est égale à zéro, y compris une dernière période stationnaire (SP_{L}) ; et
• calculer la distance parcourue entre la pluralité de périodes stationnaires précédentes ;
- comparer les distances calculées aux distances connues (d₁, d₂, d₃...) entre les localisations d'arrêt afin de trouver une séquence concordante qui corrèle la dernière période stationnaire (SP_{L}) identifiée à une localisation d'arrêt correspondante des localisations d'arrêt connues (S1, S2, S3...) et qui identifie le sens de parcours du véhicule ferroviaire (20) ; et
- déterminer la position géographique du véhicule ferroviaire en traitant une partie (vₚ) du signal de vitesse enregistré depuis la dernière période stationnaire (SP_{L}) identifiée afin de calculer la distance parcourue depuis la localisation d'arrêt (S1, S2, S3...) correspondante.

2. Procédé selon la revendication 1, dans lequel un algorithme de reconnaissance de modèle est utilisé dans l'étape de comparaison.

3. Procédé selon la revendication 1 ou 2, dans lequel le signal de vitesse linéaire est obtenu en mesurant une vitesse de rotation d'une roue de véhicule et en utilisant un diamètre connu de la roue afin d'obtenir la vitesse linéaire du véhicule ferroviaire.

4. Système de détermination de position pour un véhicule ferroviaire, le système comprenant :
• une base de données de tracés définis dans un réseau ferroviaire, chaque tracé défini ayant un nombre de localisations d'arrêt (S1, S2, S3...) planifiées de position géographique connue par rapport à un point de référence ; et
• un processeur configuré pour recevoir un signal de vitesse linéaire du véhicule et pour réaliser les étapes selon le procédé selon l'une quelconque des revendications 1 à 3.

5. Système de surveillance d'état de voie ferrée, comprenant le système de détermination de position selon la revendication 4, le système de surveillance d'état de voie ferrée comprenant un ou plusieurs capteurs montés sur un véhicule ferroviaire pour détecter des défauts superficiels de rail et un processeur configuré pour analyser un signal en provenance du ou des capteurs et identifier la présence d'un défaut superficiel, le système de détermination de position étant configuré pour déterminer la position du véhicule ferroviaire au moment où la présence d'un défaut superficiel est identifiée.
